# EUROPEAN PATENT APPLICATION

(11) **EP 1 335 285 A2**
(43) Date of publication of application: **13.08.2003**
(21) Application number: 02257580.7
(22) Date of filing: 01.11.2002
(51) Int. Cl.: G06F 9/46

(54) **Control device for file resources in a network**

(30) Priority: 07.02.2002 JP 2002030729
(71) Applicant: FUJITSU LIMITED, Kawasaki-shi, Kanagawa 211-8588 (JP)
(72) Inventor: Karube, Fumiyoshi, c/o Fujitsu Limited, Kawasaki-shi, Kanagawa 211-8588 (JP)
(74) Representative: Mohun, Stephen John

(57) **Abstract**

Exclusive control over file resources is automatically performed between the respective access requests issued by an application (21, 81, 83) requesting the exclusion of file resources and an application (21, 81, 83) requesting no such exclusion in a network having such two types of applications.

## Description

The present invention relates to a file control device handling access requests for file resources when a plurality of access sources in a plurality of use systems simultaneously use the file resources in a network system composed of a shared system and the use systems.

A network system comprises a plurality of shared systems and a plurality of use systems, and these systems are connected to one another by communicable network resources, such as an LAN (local area network) and the like. Each of the shared systems publishes the resources, such as files, etc., of the system to other systems, and each of the use systems performs necessary processes using the resources published by the shared systems.

Each use system comprises applications and a client, and each shared system comprises shared files and a server. An application is a program generated by a user in order to do a job, and a client is a program called up by the application when the application uses the shared file. A shared file is published to the use systems by a shared system, and a server is a program called up by the client when the client uses the shared file.

When in a known network system, a plurality of applications use the same shared file, each application refers/updates the file after requesting exclusion. File exclusion by a specific application means that the application obtains a right to exclusively use the file.

However, in the network system described above, all the OSs (operating systems) of a plurality of use systems are not always the same. Sometimes, some systems adopt UNIX (TM) and other systems adopt WINDOWS (TM). Due to such a difference in platform, sometimes a UNIX (TM) application requests exclusion, but a WINDOWS (TM) application requests no exclusion.

In the same use system too, sometimes an application requesting exclusion and an application requesting no exclusion co-exist. For this reason, if the following conditions are met, data are destroyed.
(1) When a plurality of applications in one or more use systems simultaneously perform the update process of one shared file.
(2) When there is an application requesting no exclusion.

In this case, since there is an application requesting no exclusion, leak is caused in exclusion. As a result, the data writing in a file is duplicated by two or more applications and the data are destroyed since unintended data writing is performed.

Embodiments of the present invention aim to provide a file control device preventing leak from being caused in exclusion when a plurality of applications in use systems simultaneously use the same shared file in a network.

In embodiments of the present invention, the file control device is provided for a use system accessing a file resource in a network. The file control device comprises an interface device, a registration device and a control device, and handles access requests issued by the first access source requesting the exclusion of the file resource and the second access source requesting no such exclusion.

The interface device sends out an access request from the first access source requesting exclusion and an access request from the second access source requesting no exclusion to a network. The registration device registers the sent access requests. Then, the control device performs exclusive control over the file resource between the respective access requests from the first and second access sources in response to the access request from the second access source.

In further embodiments of the present invention file control device is connected to a network having the first access source requesting the exclusion of a file resource and the second access source requesting no such exclusion. The file control device comprises an interface device, a registration device and a control device, and handles access requests for the file resource.

The interface device receives an access request from the first access source and an access request from the second access source. The registration device registers the received access requests. Then, the control device performs exclusive control over the file resource between the respective access requests from the first and second access sources in response to the access request from the second access source.

The invention is defined in the attached independent claims, to which reference should now be made. Further preferred features may be found in the subclaims appended thereto.

Preferred embodiments of the invention will now be described, by way of example, with reference to the accompanying drawings in which:
Fig. 1 shows the configuration of the first network system;
Fig. 2 shows the configuration of the second network system;
Fig. 3 shows the configuration of the third network system;
Fig. 4 shows the configuration of the fourth network system;
Fig. 5 shows an exclusion timing setting;
Fig. 6 shows an exclusion competition setting;
Fig. 7 shows an exclusion error handling method;
Fig. 8 is a flowchart showing the process of the first application;
Fig. 9 is a flowchart showing the process of the second application;
Fig. 10 is a flowchart showing the file operation process;
Fig. 11 is a flowchart showing the exclusion securement process;
Fig. 12 is a flowchart showing an exclusion release process;
Fig. 13 is a flowchart showing an "open" process;
Fig. 14 is a flowchart showing a "close" process;
Fig. 15 is a flowchart showing an exclusion wait request process;
Fig. 16 is a flowchart showing a waiting estimation process;
Fig. 17 is a flowchart showing a waiting monitor process;
Fig. 18 is a flowchart showing an exclusion release request process;
Fig. 19 is a flowchart showing a waiting securement process;
Fig. 20 is a flowchart showing an exclusion monitor process;
Fig. 21 is a flowchart showing an environmental setting process;
Fig. 22 shows the configuration of an information processing device; and
Fig. 23 shows a variety of storage media.

In a first embodiment of the present invention, the file control device is provided for a use system accessing a file resource in a network. The file control device comprises an interface device, a registration device and a control device, and handles access requests issued by the first access source requesting the exclusion of the file resource and the second access source requesting no such exclusion.

The interface device sends out an access request from the first access source requesting the exclusion of the file resource and an access request from the second access source requesting no such exclusion to the network. The registration device registers the sent access requests. Then, the control device performs exclusive control over the file resource between the respective access requests from the first and second access sources in response to the access request from the second access source.

The first access source corresponds to, for example, an application requesting exclusion in a use system, and the second access source corresponds to, for example, an application requesting no exclusion in the same use system. The file control device realizes a shared file in the network by processing access requests from these access sources.

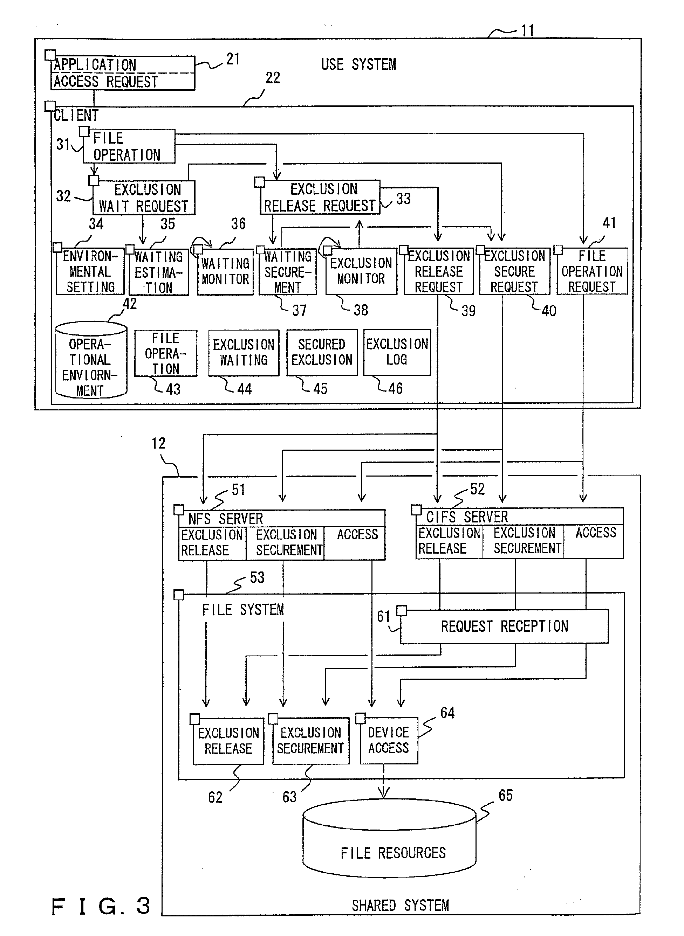

In this case, the file control system corresponds to, for example, the use system 11 shown in Fig. 3, which is described later. The interface device correspond to, for example, the file operation 31, exclusion release request 39, exclusion secure request 40 and file operate request 41 which are all shown in Fig. 3. The registration device corresponds to, for example, the file operation 43, exclusion waiting 44, secured exclusion 45 and exclusion log 46 which are all shown in Fig. 3. Then, the control device corresponds to, for example, the exclusion wait request 32, exclusion release request 33, environmental setting 34, waiting estimation 35, waiting monitor 36, waiting securement 37 and exclusion monitor 38 which are all shown in Fig. 3.

The interface device sends out an access request from an access source to a shared system through the network and registers the access request in the registration device. The control device automatically performs exclusive control over the file resource even if there is an access request from the second access source requesting no exclusion.

By providing such a file control device for a use system, a file control device realizing a shared file can perform exclusive control that conventionally an application mainly performs. Therefore, even if an application requesting no exclusion uses a shared file, the exclusion of the file can be surely performed. Therefore, there is no duplicated data writing and the destruction of a shared file due to simultaneous data writing can be prevented.

In a second embodiment of the present invention, the file control device is connected to a network having the first access source requesting the exclusion of a file resource and the second access source requesting no such exclusion. The file control device comprises an interface device, a registration device and a control device, and handles access requests for the file resource.

The interface device receives an access request from the first access source and an access request from the second access source. The registration device registers the received access requests. Then, the control device performs exclusive control over the file resource between the respective access requests from the first and second access sources in response to the access request from the second access source.

The first access source corresponds to, for example, an application requesting exclusion in a use system, and the second access source corresponds to, for example, an application requesting no exclusion in the same or a different use system. The file control device realizes a shared file in a network by processing respective access requests from these access sources.

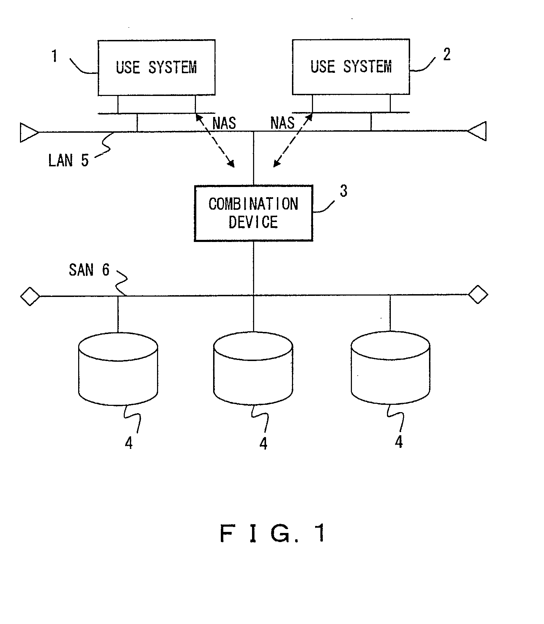

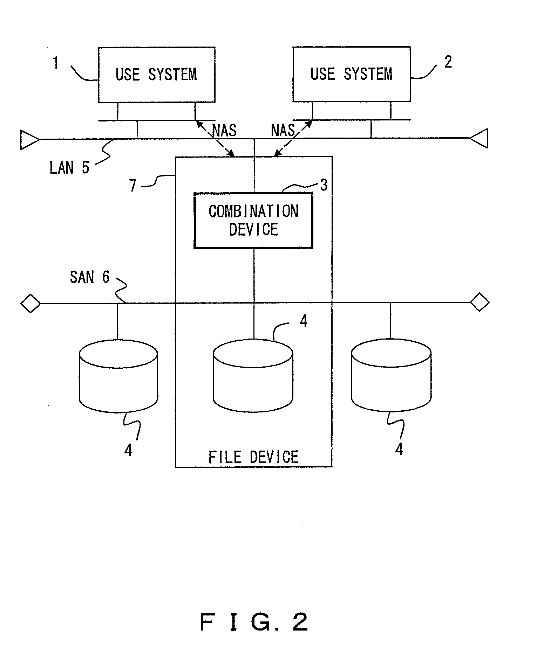

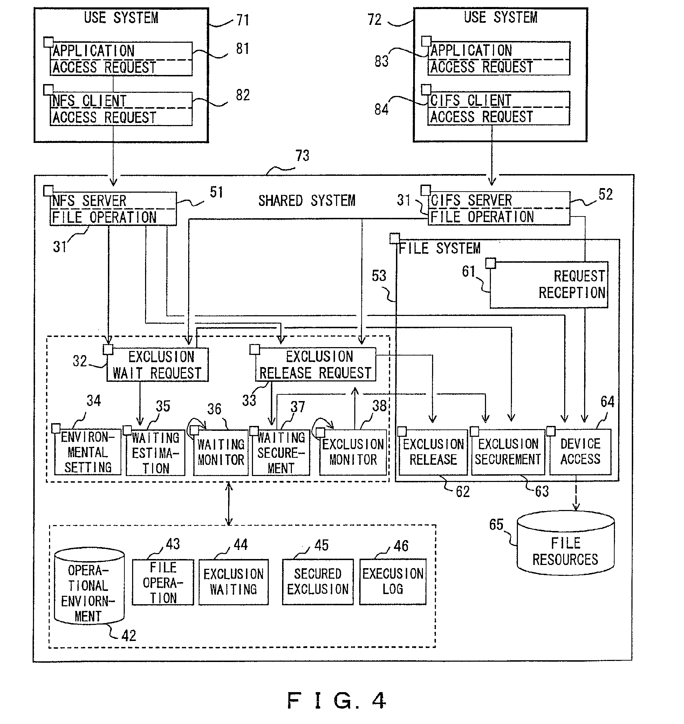

In this case, the file control device corresponds to, for example, the combination device 3 shown in Fig. 1 or the file device 7 shown in Fig. 2, which are described later. The interface device corresponds to, for example, the file operation 31 shown in Fig. 4, which is described later. The registration device corresponds to, for example, the file operation 43, exclusion waiting 44, secured exclusion 45 and exclusion log 46, which are all shown in Fig. 4. Then, the control device corresponds to, for example, exclusion wait request 32, exclusion release request 33, environmental setting 34, waiting estimation 35, waiting securement 37 and exclusion monitor 38, which are all shown in Fig. 4.

The interface device receives an access request from a use system through a network and registers the access request in the registration device. The control device automatically performs exclusive control over the file resource even if there is an access request from the second access source requesting no exclusion.

By providing such a file control device for a shared system, exclusive control can be collectively performed as in the first embodiment. Therefore, the exclusion of a shared file is surely performed, and the destruction of the shared file due to simultaneous data writing can be prevented.

Fig. 1 shows the configuration of a network system having a shared system and a plurality of use systems. The network system shown in Fig. 1 comprises use systems 1 and 2, a combination device 3 and disk devices 4. Each of the use systems 1 and 2 is connected to the combination device 3 through a LAN 5, and the disk devices 4 are connected to the combination device 3 through a SAN (storage area network) 6. The combination device 3, disk devices 4 and SAN 6 correspond to a shared system.

The use systems 1 and 2 adopt UNIX (TM) and WINDOWS (TM), respectively. These use systems both have an application requesting exclusion and an application requesting no exclusion. Although in Fig. 1, only two use systems are shown, generally, there are more of use systems in the LAN 5.

The disk devices 4 store shared files, and the SAN 6 is, for example, a high-speed communication network using fiber channels. The combination device 3 provides an access interface with a shared file for the use systems 1 and 2 in the LAN 5. As seen from the use systems 1 and 2 side, the combination device 3 corresponds to a NAS (network attached storage) server.

Fig. 2 shows the configuration of another network system. In the network shown in Fig. 2, the constituent components with the same reference numbers as in Fig. 1 have the same functions as those in Fig. 1. In this case, the file device 7 with the combination device 3 and a disk device 4 corresponds to a NAS server, and the file device 7, discrete disk devices 4 and SAN 6 correspond to a shared system.

In the network systems shown in Figs. 1 and 2, there are two cases: a case where the use systems 1 and 2 are used as file control devices and a case where either the combination device 3 or the file device 7 is used as a file control device. In the former case, the client in each of the use systems 1 and 2 performs exclusive control, and in the latter case, the server in the combination device 3 performs exclusive control.

Usually, access to a shared file from an application in a use system is made by a file operation, such as "open"/"close"/"read"/"write" /"rewrite", etc., and these file operation services are provided by the client or server. In this preferred embodiments, the following exclusive control processes are added to the file operation.
(1) The setting of an exclusion environment (the operational environment of exclusive control) designated by a user is added.
(2) A process requesting a file system to secure exclusion (exclusion wait request) is added to processes needed to secure exclusion, such as "open"/"read"/"write"/"rewrite", etc.
(3) A process requesting a file system to release exclusion (exclusion release request) is added to processes needed to release exclusion, such as "close", etc.
(4) A process reserving the exclusion securement of a file resource being used exclusively (exclusion waiting) is added.
(5) An exclusion monitor process and an exclusion release process are added as measures against a case where an application terminates while holding exclusion.

Exclusion timing and a process content are set together as exclusion environments.

By adding such processes to the file operation, the client or server can collectively perform exclusive control instead of an application. Therefore, even if there are two access requests for the same shared file, that is, one from an application requesting exclusion in the use system 1 and one from an application requesting no exclusion in the use system 2, exclusion can be surely performed.

Even if there are two access requests for the same shared file, that is, one from an application requesting exclusion and one from an application requesting no exclusion in the same use system too, exclusion can be surely performed.

Fig. 3 shows the configuration of a network system where exclusive control is performed in a use system. The network system shown in Fig. 3 comprises a use system 11 and a shared system 12. The use system 11 corresponds to the use system 1 or 2 shown in Figs. 1 and 2, and the shared system 12 corresponds to the combination of the combination device 3 shown in Fig. 1 or the file device shown in Fig. 2, the disk devices 4, and the SAN 6.

The use system 11 comprises an application 21 and a client 22. The application 21 requests access to a file to the client 22.

The client 22 comprises programs of file operation 31, exclusion wait request 32, exclusion release request 33, environmental setting 34, waiting estimation 35, waiting monitor 36, waiting securement 37, exclusion monitor 38, exclusion release request 39, exclusion secure request 40 and file operation request 41, and performs file control while referring to/updating data of operational environment 42, file operation 43, exclusion waiting 44, secured exclusion 45 and exclusion log 46.

The file operation 31 operates as an application using a file system 53 in the shared system 12, and transfers an access request issued by the application 21 to the file system 53. This file operation 31 can be realized, for example, by a pipe providing a communication protocol to be used between different systems.

In file control by the client 22, the file operation 31 calls up an exclusion wait request 32, an exclusion release request 33 or a file operation request 41, as requested. The exclusion wait request 32 confirms an exclusion status, requests exclusion and so forth, and the exclusion release request 33 releases exclusion, releases exclusion waiting and so forth.

The shared system 12 comprises an NFS server 51, a CIFS server 52, a file system 53 and file resources 65. The NFS server 51, CIFS server 52 and file system 53 are installed in the combination device 3 shown in Fig. 1 or 2. The file resources 65 correspond to shared files in the disk device 4.

The file system 53 provides a service of enabling the application 21 to use a plurality of discontinuous blocks of a hard disk as one file, and it comprises programs of request reception 61, exclusion release 62, exclusion securement 63 and device access 64. Then, the file system 53 accesses the file resources 65 in response to an access request from the NFS (network file system) server 51 or CIFS (common Internet file system) server 52.

If the use system 11 corresponds to the use system 1 adopting UNIX (TM), the client 22 corresponds to an NFS client. In this case, the exclusion release request 39, exclusion secure request 40 and file operation request 41 requests the processes of exclusion release, exclusion securement and file operation (access) to the exclusion release 62, exclusion securement 63 and device access 64, respectively, through the NFS server 51.

However, if the use system 11 corresponds to the use system 2 adopting WINDOWS (TM), the client 22 corresponds to a CIFS server 52. In this case, each of these programs requests the respective process to the file system 53, and the request reception 61 calls up the exclusion release 62, exclusion securement 53 and device access 64, respectively.

Fig. 4 shows the configuration of a network system where exclusive control is performed in a shared system. The network system shown in Fig. 4 comprises use systems 71 and 72 and a shared system 73. The use system 71 corresponds to the use system 1 shown in Fig. 1 and 2, the use system 72 corresponds to the use system 2 shown in Fig. 1 and 2, and the shared system 73 corresponds to the combination of the combination device 3 shown in Fig. 1 or the file device 7 shown in Fig. 2, the disk devices 4, and the SAN 6.

The use system 71 comprises an application 81 and an NFS client 82, and the use system 72 comprises an application 83 and a CIFS client 84. The application 81 requests access to a file to the NFS client 82, and the application 83 requests access to a file to the CIFS client 84.

The shared system 73 comprises programs of exclusion wait request 32, exclusion release request 33, environmental setting 34, waiting estimation 35, waiting monitor 36, waiting securement 37, exclusion monitor 38, operational environment 42, file operation 43, exclusion waiting 44, secured exclusion 45 and exclusion log 46 in addition to the NFS server 51, CIFS server 52, file system 53 and file resources 65. These programs are installed in the combination device 3 shown in Figs. 1 and 2.

Each of the NFS server 51 and CIFS server 52 comprises a file operation 31. The NFS server 51 receives an access request from the NFS client 82, and the CIFS server 52 receives an access request from the CIFS client 84. In this case, the file operation 31 transfers the access requests issued by the applications 81 and 83 to the file system 53.

Each of the file operation 31, exclusion wait request 32, exclusion release request 33, environmental setting 34, waiting estimation 35, waiting monitor 36, waiting securement 37 and exclusion monitor 38 performs exclusive control while referring to/updating data of operational environment 42, file operation 43, exclusion waiting 44, secured exclusion 45 and exclusion log 46. In this case, the file operation 31 calls up the exclusion wait request 32 or exclusion release request 33, as requested.

The file system 53 comprises programs of request reception 61, exclusion release 62, exclusion securement 63 and device access 64, and it accesses the file resources 65 in response to a request from the file operation 31. The file operation 31 of the NFS server 51 directly requests a file operation to the device access 64. However, the file operation 31 of the CIFS server 52 requests a file operation to the file system 53, and the request reception 61 calls up the device access 64.

According to the system shown in Fig. 3 or 4, exclusive control is collectively performed by a client or server realizing a shared file. Therefore, there is no duplicated data writing due to an application error (the non-acquisition of exclusion, an acquisition of erroneous exclusion, etc.) and the destruction of a shared file due to simultaneous data writing can be prevented accordingly.

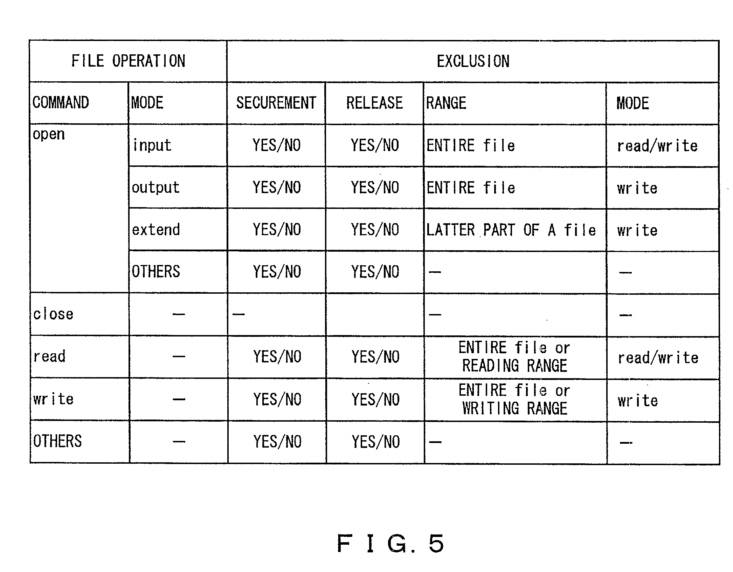

Next, data registered in the operational environment 42 of the network system in Figs. 3 and 4 are described with reference to Figs. 5 through 7. A user sets the following parameters in the operational environment 42.
(a) Exclusion range (range where exclusion is performed)
(b) Exclusion timing (timing when exclusion is performed in a file operation, such as "open"/"close", etc.)
(c) Exclusion competition (competition relation between already secured exclusion and newly requested exclusion)
(d) Exclusion error handling method (method for notifying an application of an error when there is an error)
(e) Allowed exclusion holding time (time limit for automatically releasing exclusion held for a long time)
(f) Allowed exclusion waiting time (time limit for automatically releasing long-time exclusion waiting)
(g) Allowed exclusion waiting estimation time (time limit for performing an error process when a long-time exclusion waiting is anticipated)

Out of these methods, for the designation method of (a) exclusion range, for example, the following methods can be used.
(1) The service range of a server (range published to clients) is collectively designated.
(2) Exclusion is designated for each file.
   - Exclusion is designated when a file is generated.
   - Exclusion is designated for each directory where there is a file.
   - A file extension is designated (*.txt, *.doc, *.exe, etc.)
   - The generic term of a file name is designated (wild cards, such as AB*, A*B, *AB, etc., are used).
   - The range of file names is designated (aaa to ccc, etc.)
   - Non-exclusion file names are designated (¬aaa, etc.)
   - A combination of some of the designation methods described above

Although the system can unconditionally determine (b) exclusion timing, in this preferred embodiment, as shown in Fig. 5, a user sets the "open"/"close" time, "read"/"write" time of a file or one of their combinations as exclusion timing. In this case, the user performs an environmental setting for each combination of a file operation command and mode by designating the existence/non-existence of exclusion securement and exclusion release.

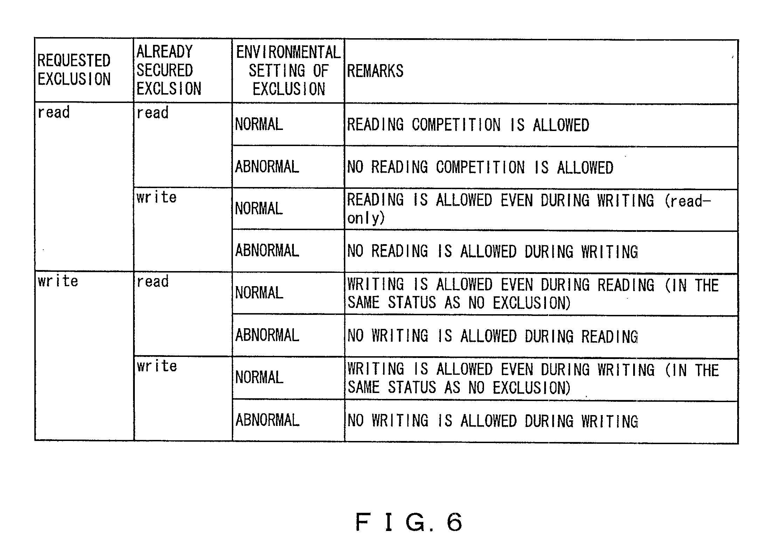

As the parameter of (c) exclusion competition, what exclusive control should be performed when there is an access request for file resources where exclusion is already secured, is set. Although the system can also unconditionally set such a parameter, in this preferred embodiment, as shown in Fig. 6, a user can set what exclusive control should be performed. In this case, the user performs an environmental setting by designating "normal" or "abnormal" for each combination of a requested exclusion ("read" or "write") and already secured exclusion ("read" or "write").

For example, if already secured exclusion is "read" and requested exclusion is also "read", reading competition occurs. However, if this competition is allowed to happen, "normal" is set. If this competition is not allowed to happen, "abnormal" is set. If "normal" is set, exclusion waiting is not performed. If "abnormal" is set, an error process and exclusion waiting are performed.

As the parameter of (d) exclusion error handling method, how exclusion error, exclusion waiting and exclusion securement should be handled is set when exclusive control is realized by a program other than an application (when an application does not request exclusion) as in this preferred embodiment.

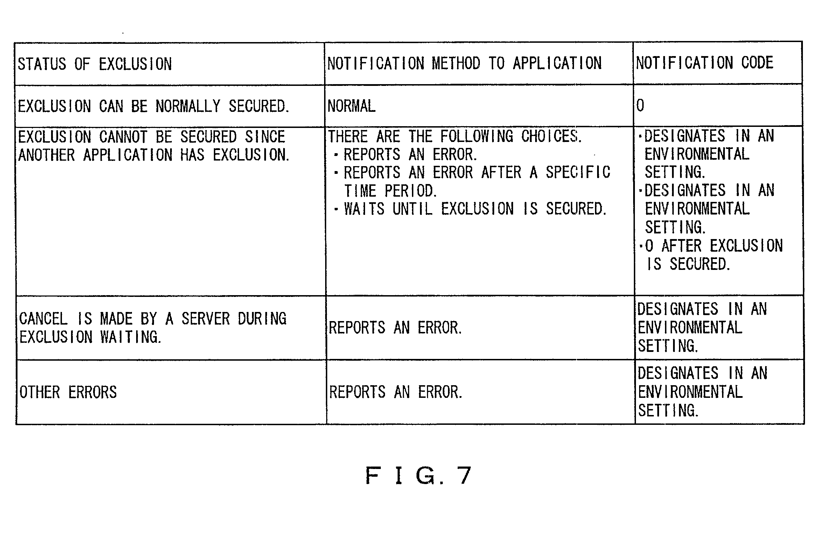

Since such a parameter indicates how an error is reported to the application except when exclusion is normally secured, the error can also be unconditionally reported. However, in this preferred embodiment, as shown in Fig. 7, a user can set an error notification method and a notification code. In this case, the user performs an environmental setting by designating an error notification method and a notification code depending on an exclusion status.

When an application requests exclusion, the application designates an exclusion method and the like. Therefore, the result of the designated exclusion is reported to the application.

As the parameter of (e) allowed exclusion-holding time, an allowance value (a specific time period) of an exclusion holding time is set. Since a use system and a shared system are connected through a network, if either a client or a server is out of order, the other cannot be notified of the failure. In this case, if the exclusion continues to be secured, the exclusion cannot be released until the system where the failure has occurred is re-activated. Therefore, if there is no file operation request from a requester having obtained exclusion even after the allowed exclusion-holding time, the exclusion is compulsorily released.

As the parameter of (f) allowed exclusion waiting time, the allowance value (a specific time period) of exclusion waiting time is set. An application service is affected when a waiting time due to exclusion exceeds a specific time period. Therefore, if the waiting time exceeds the allowed exclusion-waiting time, it is regarded as an exclusion error.

As the parameter of (g) allowed exclusion-waiting estimation time, the allowance value (a specific time period) of exclusion waiting estimation time is set. If it is anticipated that an exclusion waiting time will exceed a specific time period, it is anticipated that an application service will be affected. Therefore, if it is anticipated that a waiting time due to exclusion will exceed the allowed exclusion-waiting estimation time, it is regarded as an exclusion error.

A user can customize exclusive control by designating the parameters of such an operational environment 42.

Next, data registered in the file operation 43, exclusion waiting 44, secured exclusion 45 and exclusion log 46 are described. The data are, for example, stored in a memory in a form of table.

The file operation 43 stores the following pieces of information for each file of a process target.
- File handle (identification information for specifying a file, and it is returned at the time of "open")
- Process ID (identification information for specifying an application or a process)
- Final file operation type ("open", "close", "read", "write", etc.)
- Final file operation parameter (parameter of a final file operation)
- Final file operation time (year, month, day, hour, minute, second, 1/1000 second)

The exclusion waiting 44 stores the following pieces of information for each exclusion waiting.
- File handle
- Process ID (identification information for specifying an application or a process waiting for exclusion)
- Exclusion request time (year, month, day, hour, minute, second, 1/1000 second)
- Exclusion type (reading /writing exclusion and user /system exclusion)
- Exclusion range (file designation and the exclusion range of a file (top/end offset))

User exclusion means to perform exclusion for file resources designated by a user, and system exclusion means to compulsorily perform exclusion for all users using a file system.

Secured exclusion 45 stores the following pieces of information for each exclusion.
- File handle
- Process ID (identification information for specifying an application or a process for which exclusion is secured)
- Exclusion request time
- Exclusion securement time (year, month, day, hour, minute, second, 1/1000 second)
- Exclusion type
- Exclusion range
- Exclusion waiting (pointer to the relevant entry of exclusion waiting 44)

Exclusion log 46 is obtained when exclusion is requested, when exclusion is secured or when exclusion is released and it stores the following pieces of information.
- File handle
- Process ID (identification information for specifying an application or a process for which exclusion is secured)
- Exclusion request time
- Exclusion securement time
- Exclusion type
- Exclusion range
- Exclusion release time (year, month, day, hour, minute, second, 1/1000 second)
- Exclusion release reason (user designation, compulsory release after a specific time has been elapsed)

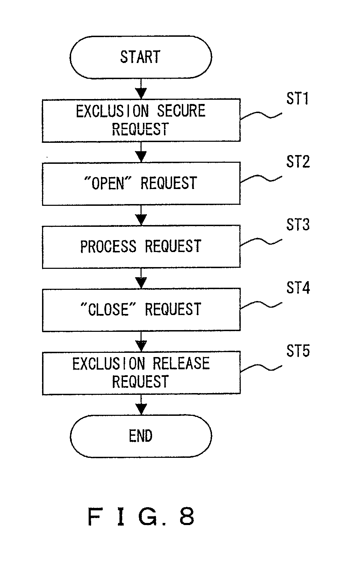

Next, an exclusive control process in the network system shown Fig. 3 and 4 with reference to Figs. 8 through 21 is described in detail.

Fig. 8 is a flowchart showing the process of an application requesting exclusion. First, this application issues an exclusion secure request for a file to be accessed (step ST1) and further issues an "open" request (step ST2). Then, the application issues a process request needed to access the content of a file ("read" request, "write" request, "rewrite" request, etc.) (step ST3). Then, the application issues a "close" request (step ST4), and further issues an exclusion release request (step ST5). The issued requests are transferred to the file operation 31 of the client 22, NFS server 51 or CIFS server 52.

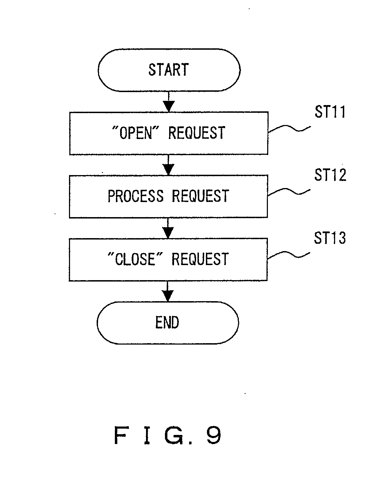

Fig. 9 is a flowchart showing the process of an application requesting no exclusion. Processes in steps ST11 through ST13 shown in Fig. 9 are the same as those in steps ST2 through ST4 shown in Fig. 8. This application issues neither an exclusion secure request nor an exclusion release request.

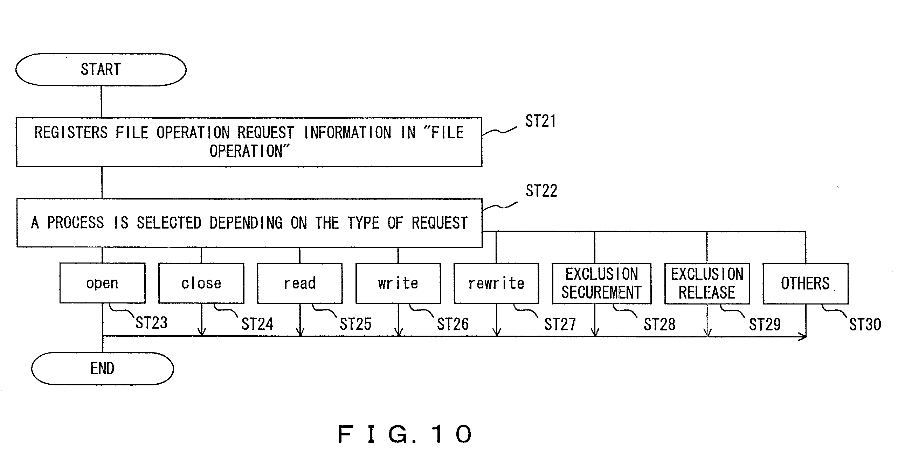

Fig. 10 is a flowchart showing the process of the file operation 31 which transfers these requests issued by these applications to the file system 53. First, the file operation 31 registers information about a file operation requested by an application in the file operation 43 (step ST21).

Then, the file operation 31 selects a process depending on the type of a request from the application (step ST22), and performs "open" (step ST23), "close" (step ST24), "read" (step ST25), "write" (step ST26), "rewrite" (step ST27), exclusion securement (step ST28), exclusion release (step ST29) or others (step ST30).

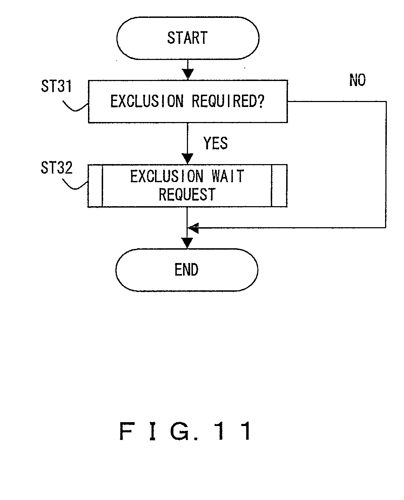

Fig. 11 is a flowchart showing the exclusion securement process performed in step ST28 shown in Fig. 10. First, the file operation 31 refers to the exclusion range of the operational environment 42 and judges whether exclusion is required (step ST31). If it is judged that exclusion is required, the file operation 31 calls up an exclusion wait request 32 (step ST32). If it is judged that exclusion is not required, the file operation 31 terminates the process without further performing any process.

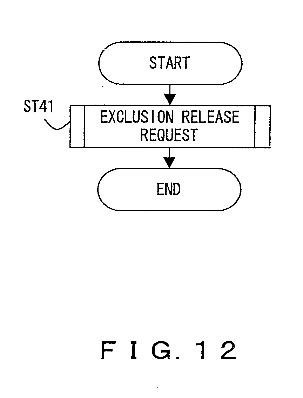

Fig. 12 is a flowchart showing the exclusion release process performed in step ST29 shown in Fig. 10. In this process, the file operation 31 calls up the exclusion release request 33 (step ST41).

Since almost the same exclusive control is performed over "open", "read", "write" and" rewrite" out of the processes shown in Fig. 10, an "open process is described as an example.

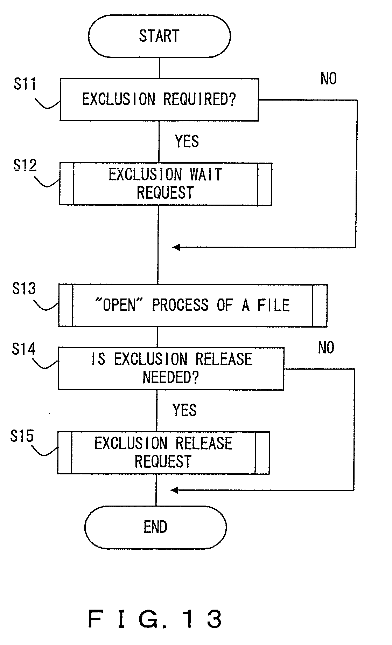

Fig. 13 is a flowchart showing the "open" process performed in step ST23 shown in Fig. 10. First, the file operation 31 refers to the exclusion range and exclusion timing of the operational environment 42, and judges whether exclusion is required (step S11). If it is judged that exclusion is required, the file operation 31 refers to the exclusion timing and exclusion competition of the operational environment 42 and calls up the exclusion wait request 32 (step S12). If exclusion is secured, the file operation 31 performs the "open" process of a file (step S13). If it is judged that exclusion is not required, the file operation 31 immediately performs the process in step S13.

Then, the file operation 31 refers to the exclusion timing and judges whether exclusion release is required (step S14). If it is judged that exclusion release is required, the file operation 31 calls up exclusion release request 33 (step S15) and it terminates the process. If it is judged that exclusion release is not required, the file operation 31 terminates the process without further performing any process.

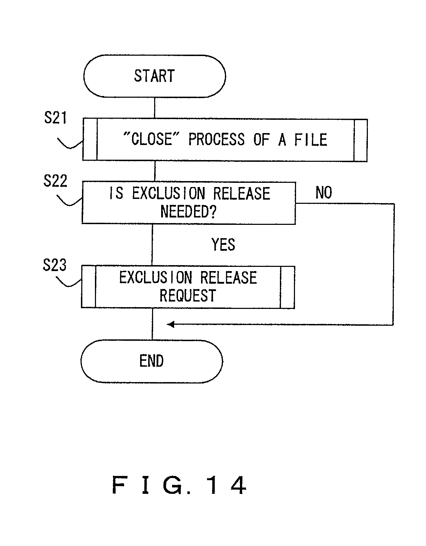

Fig. 14 is a flowchart showing the "close" process performed in step ST24 shown in Fig. 10. First, the file operation 31 performs the "close" process of a file (step S21). Then, the file operation 31 refers to the exclusion timing of the operational environment 42 and judges whether exclusion release is required (step S22). If it is judged that exclusion release is required, the file operation 31 calls up the exclusion release request 33 (step S23) and terminates the process. If it is judged that exclusion release is not required, the file operation 31 terminates the process without further performing any process.

In step S13 shown in Fig. 13 and step S21 shown in Fig. 14, the file operation 31 calls up the device access 64, and the called device access 64 accesses the file resources 65.

In this case, in the system shown in Fig. 3, the file operation 31 calls up the device access 64 through the file operation request 41. In the system shown in Fig. 4, the file operation 31 of the NFS server 51 directly calls up the device access 64, while the file operation 31 of the CIFS server 52 calls up the device access 64 through the request reception 61.

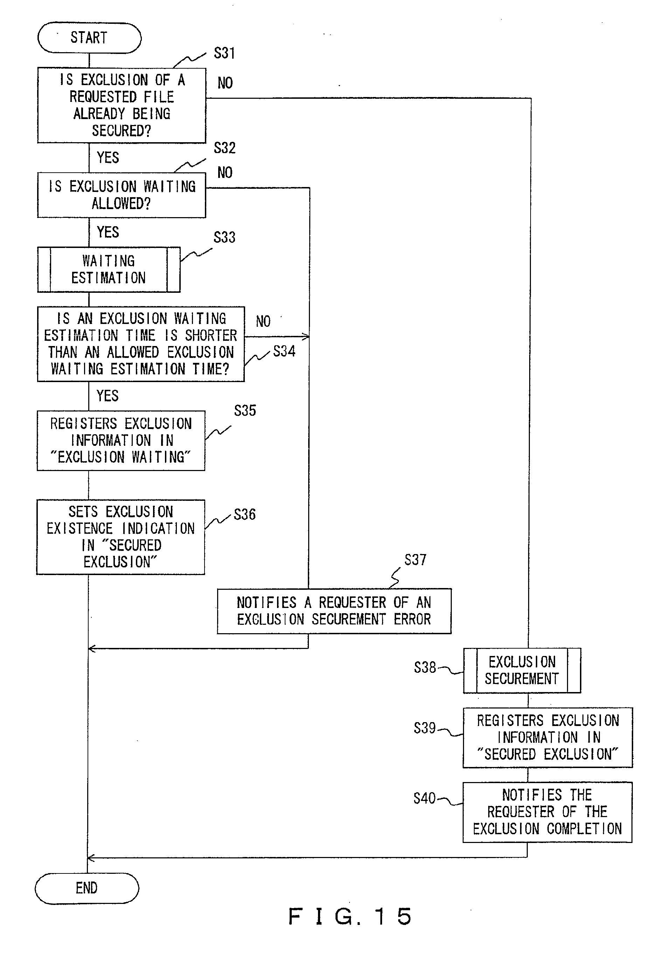

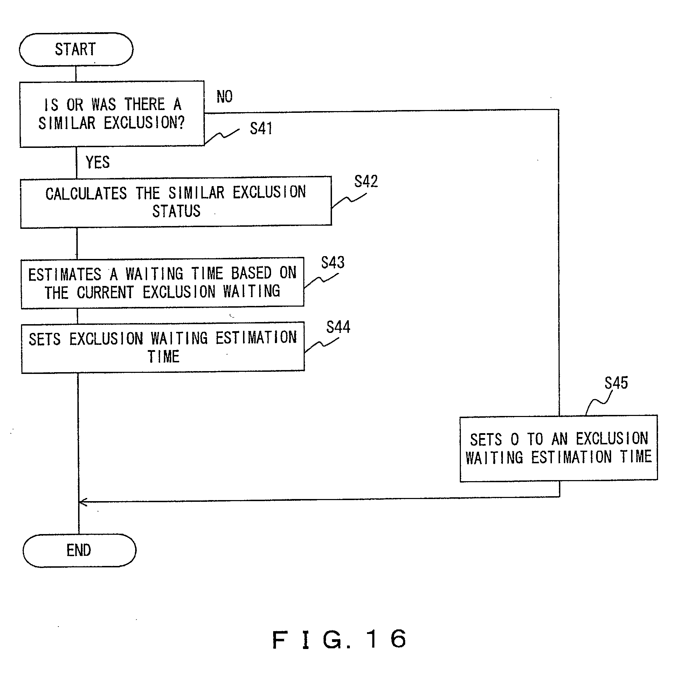

Fig. 15 is a flowchart showing the process of the exclusion wait request 32 called up in step ST32 shown in Fig. 11 and in step S12 shown in Fig. 13. First, the exclusion wait request 32 refers to the secured exclusion 45 and checks whether exclusion of the requested file is already secured (step S31). If the exclusion of the file is secured, then the exclusion wait request 32 refers to the exclusion error handling method of the operational environment 42 and judges whether exclusion waiting is allowed (step S32). If exclusion waiting is allowed, the exclusion wait request 32 calls up the waiting estimation 35 (step S33). The called waiting estimation 35 performs the process shown in Fig. 16.

First, the waiting estimation 35 refers to the exclusion log 46 and checks whether there is or was a similar exclusion (step S41). The similar exclusion corresponds to, for example, exclusion information with the same file handle.

If the similar exclusion is recorded in the exclusion log 46, the exclusion status is calculated (step S42). In this case, for example, an average exclusion-holding time is calculated by dividing the total exclusion-holding time of a plurality of recorded exclusions by the number of the exclusions. The exclusion-holding time can be calculated as a difference between an exclusion securement time and an exclusion release time that is stored in the exclusion log 46.

Then, a waiting time is estimated based on the current status of exclusion waiting (step S43). In this case, an estimation time can be calculated by multiplying the calculated average exclusion-holding time by the number of current waiting requests. Then, the calculated time is set as an exclusion waiting estimation time (step S44).

If in step S41 a similar exclusion is not recorded in the exclusion log 46, it is judged that a waiting time cannot be estimated, and 0 is set as an exclusion waiting estimation time (step S45).

If the waiting estimation finishes, the exclusion waiting request 32 compares the set exclusion-waiting estimation time with the allowed exclusion-waiting estimation time of the operational environment 42 (step S34 shown in Fig. 15). If the set exclusion-waiting estimation time is shorter than the allowed exclusion - waiting estimation time, the exclusion waiting request 32 registers exclusion information in the exclusion waiting 44 (step S35) and sets the existence indication of a waiting exclusion in the secured exclusion 45 (step S36). In this case, a pointer to the information registered in the exclusion waiting 44 is set as the existence indication of a waiting exclusion.

If in step S32 exclusion waiting cannot be allowed or in step S34 the exclusion-waiting estimation time is equal to or longer than the allowed exclusion-waiting estimation time, the exclusion wait request 32 refers to the exclusion error handling method of the operational environment 42 and notifies a requester of an exclusion securement error (step S37).

If in step S31 the exclusion of the requested file is not being secured, the exclusion wait request 32 refers to the exclusion timing of the operational environment 42 and calls up the exclusion securement 63 (step S38).

In the system shown in Fig. 3, the exclusion wait request 32 calls up the exclusion securement 63 through the exclusion secure request 40, while in the system shown in Fig. 4, the exclusion wait request 32 directly calls up the exclusion securement 63. The called exclusion securement 63 secures the exclusion of the requested file.

Then, the exclusion wait request 32 registers exclusion information in the secured exclusion 45 (step S39), refers to the exclusion error handling method of the operational environment 42 and notifies the requester of exclusion completion (step S40).

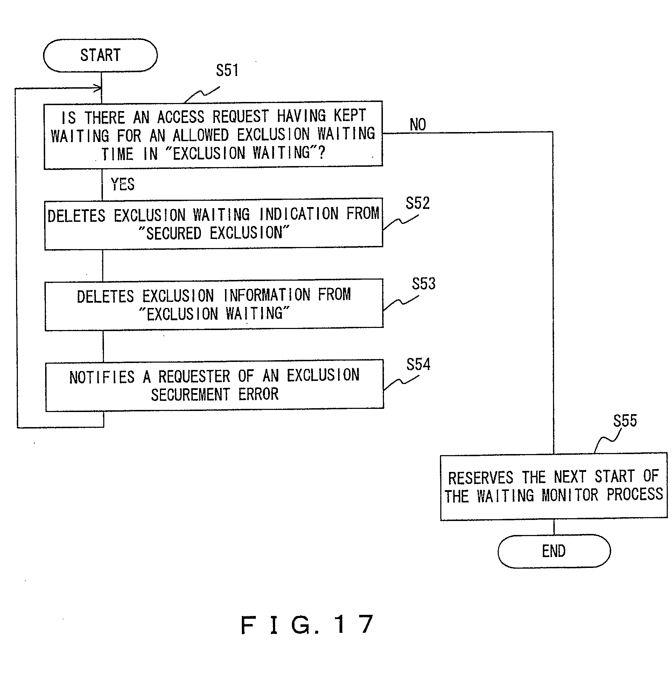

Fig. 17 is a flowchart showing the process of the waiting monitor 36. First, the waiting monitor 36 checks whether there is exclusion information, waiting time of which is equal to or longer than the allowed exclusion waiting time of the operational environment 42, in the exclusion waiting 44 (step S51). If there is such exclusion information, the waiting monitor 36 deletes the existence indication of a waiting exclusion from the secured exclusion 45 (step S52) and deletes exclusion information from the exclusion waiting 44 (step S53).

Then, the waiting monitor 36 refers to the exclusion error handling method of the operational environment 42, notifies the requester of an exclusion securement error (step S54) and repeats the processes in and after step S51. If in step S51, there becomes no exclusion information, waiting time of which is equal to or longer than the allowed exclusion waiting time, the next starting time for the waiting monitor 36 is reserved (step S55) and the process is terminated.

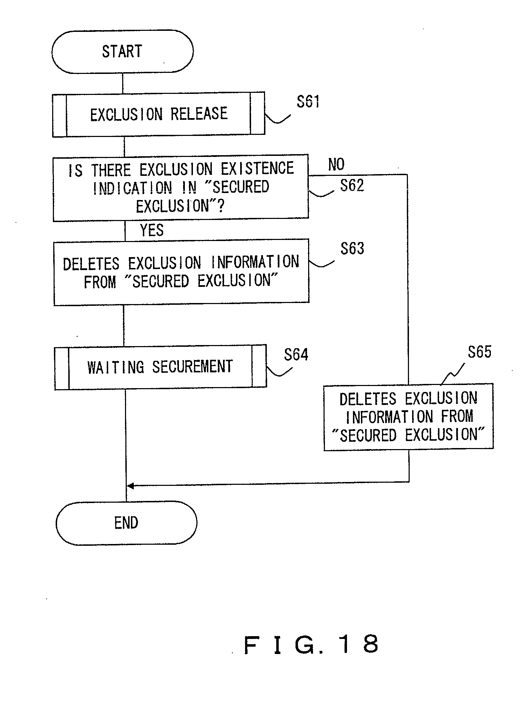

Fig. 18 is a flowchart showing the process of the exclusion release request 33 called up in step ST41 shown in Fig. 12, in step S15 shown in Fig. 13 and in step S23 shown in Fig. 14. First, the exclusion release request 33 calls up the exclusion release 62 (step S61).

In the system shown in Fig. 3, the exclusion release request 33 calls up the exclusion release 62 through the exclusion release request 39, while in the system shown in Fig. 4, the exclusion release request 33 directly calls up the exclusion release 62. The called exclusion release 62 releases exclusion of the requested file.

Then, the exclusion release request 33 checks whether the existence of a waiting exclusion is indicated in the secured exclusion 45 (step S62). If the existence of a waiting exclusion is indicated, the exclusion release request 33 deletes exclusion information from the secured exclusion 45 (step S63), refers to the exclusion timing of the operational environment 42 and calls up the waiting securement 37 (step S64).

In this way, the waiting securement 37 secures exclusion for exclusion information in exclusion waiting 44 pointed to by the pointer of the deleted exclusion information. In other words, exclusion is newly secured for another request waiting for the exclusion release of the file.

If in step S62 the existence of a waiting exclusion is not indicated in the secured exclusion 45, the exclusion release request 33 deletes exclusion information from the secured exclusion 45 (step S65) and terminates the process.

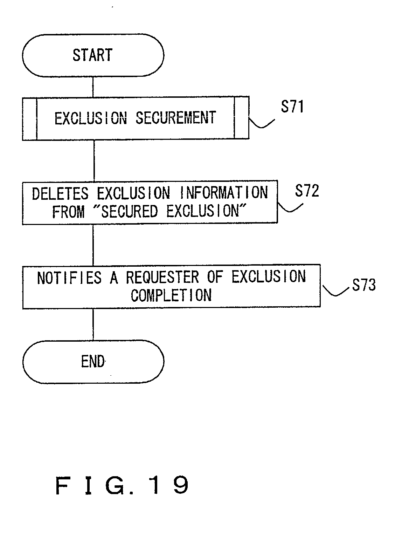

Fig. 19 is a flowchart showing the process of the waiting securement 37 called up in step S64 shown in Fig. 18. First, the waiting securement 37 calls up the exclusion securement 63 (step S71). In the system shown in Fig. 3, the waiting securement 37 calls up the exclusion securement 63 through the exclusion secure request 40, while in the system shown in Fig. 4 the waiting securement 37 directly calls up the exclusion securement 63. The called exclusion securement 63 secures the exclusion of the requested file.

Then, the waiting securement 37 deletes exclusion information from the exclusion waiting 44 (step S72), refers to the exclusion error handling method of the operational environment 42 and notifies the requester of exclusion completion (step S73).

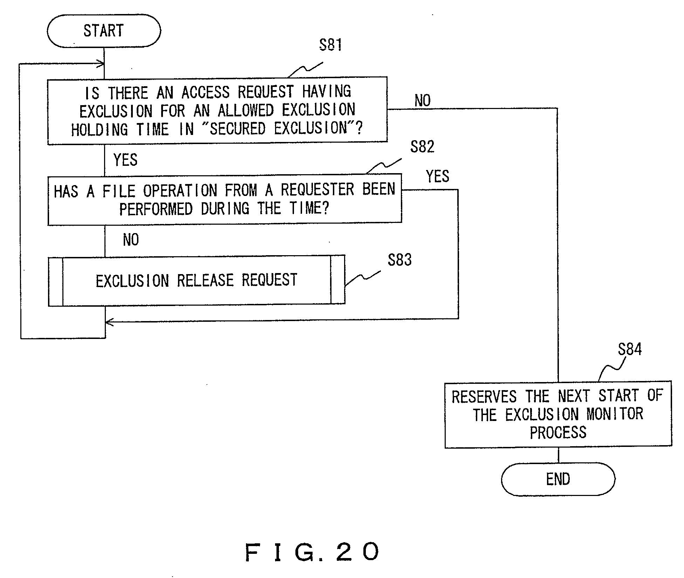

Fig. 20 is a flowchart showing the process of the exclusion monitor 38. First, the exclusion monitor 38 checks whether there is exclusion information, exclusion holding time of which is equal to or longer than the allowed exclusion holding time of the operational environment 42, in the secured exclusion 45 (step S81). If there is such exclusion information, the exclusion monitor 38 refers to the file operation 43 and checks whether the file operation from the requester is already performed (step S82). If the file operation from the requester is not performed yet, the exclusion monitor 38 calls up the exclusion release request 33 (step S83) and it repeats the processes in and after step S83. The exclusion release request 33 called up in step S83 performs the process shown in Fig. 18. If the file operation from the requester is already performed, the exclusion monitor 38 repeats the processes in and after step S81 without calling up the exclusion release request 33.

If in step S81 there is no exclusion information, exclusion holding time of which is equal to or longer than the allowed exclusion holding time, the next starting time of the exclusion monitor 38 is reserved (step S84) and the process is terminated.

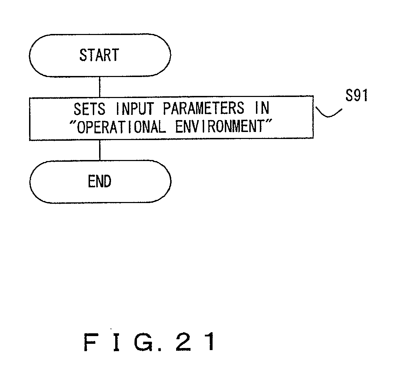

Fig. 21 is a flowchart showing the process of the environmental setting 34. First, the environmental setting 34 sets parameters input by a user in the operational environment 42 (step S91). The set parameters are referred to from time to time in each of the processes described above.

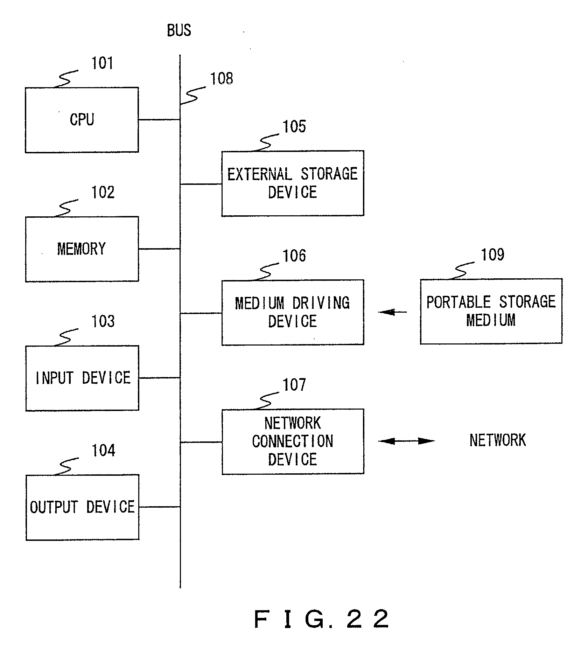

Each of the use system 11 and shared system 12 shown in Fig. 3, and the use systems 71 and 72 and shared system 73 shown in Fig. 4 can be configured, for example, by the information processing device (computer) shown in Fig. 22. The information processing device shown in Fig. 22 comprises a CPU (central processing unit) 101, a memory 102, an input device 103, an output device 104, an external storage device 105, a medium driving device 106 and a network connection device 107, which are all connected to one another by a bus 108.

The memory 102 stores programs and data used for the process, and for the memory 102, a ROM (read-only memory), a RAM (random-access memory) and the like are used. The CPU 101 performs necessary processes by using the memory 102 and executing the programs.

The operational environment 42, file operation 43, exclusion waiting 44, secured exclusion 45 and exclusion log 46 which are all shown in Figs. 3 and 4, correspond to data stored in the memory 102. The applications 21, 81 and 83, clients 22, 82 and 84, file operation 31, exclusion wait request 32, exclusion release request 33, environmental setting 34, waiting estimation 35, waiting monitor 36, waiting securement 37, exclusion monitor 38, exclusion release request 39, exclusion secure request 40, file operation request 41, servers 51 and 52, file system 53, request reception 61, exclusion release 62, exclusion securement 63 and device access 64 correspond to programs stored in the memory 102.

The input device 103 is used to input instructions and information from an operator (user or shared system manager), and for the input device 103, a keyboard, a pointing device, a touch panel and the like are used. The output device 104 is used to output inquiries and process results to an operator, and for the output device 104, a display, a printer, a speaker and the like are used.

For the external storage device 105, a magnetic disk device, an optical disk device, a magneto-optical disk device, a tape device and the like are used. The information processing device stores in advance the programs and data described above in this external storage device 105, and uses the programs and data by loading them onto the memory 102, if requested. The file resources 65 shown in Figs. 3 and 4 are also stored in the external storage device 105.

The medium driving device 106 drives a portable storage medium 109 and accesses its recorded content. For the portable storage medium 109, an arbitrary computer-readable storage medium, such as a memory card, a flexible disk, a CD-ROM (compact-disk read-only memory), an optical disk, a magneto-optical disk, etc., is used. The operator stores in advance the programs and data in such a portable storage medium 109, and uses the programs and data by loading them onto the memory 102, if requested.

The network connection device 107 is connected to an arbitrary communication network, such as a LAN, the Internet, etc., and it performs data conversion accompanying communications. The information processing device receives the programs and data from an external device through the network connection device 107, and uses the programs and data by loading them onto the memory 102, if requested.

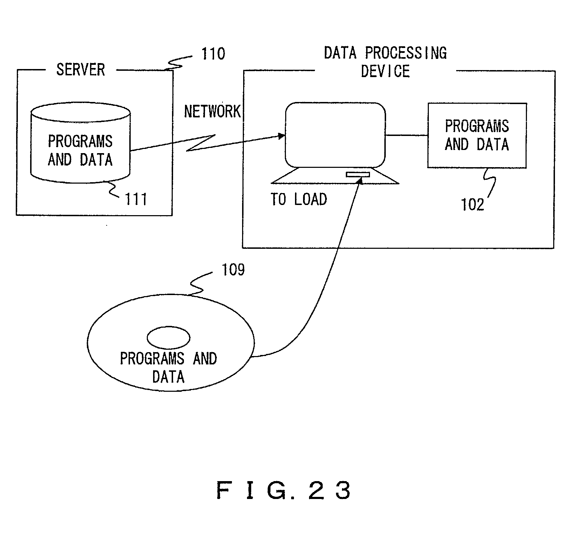

Fig. 23 shows computer-readable storage media providing the information processing device shown in Fig. 22 with the programs and data. The programs and data that are both stored in the portable storage medium 109 or the database 111 of a server 110, are loaded onto the memory 102. In this case, the server 110 generates a propagation signal propagating the programs and data, and transmits the signal to the information processing device through an arbitrary medium in a network. Then, the CPU 101 performs necessary processes by using the data and executing the programs.

According to the present invention, if an application requesting exclusion and an application requesting no exclusion in one or more use systems simultaneously use a shared file, exclusion of the shared file can be surely performed. In particular, even if an application requesting no exclusion uses the shared file, exclusion can be automatically performed. Therefore, the destruction of the shared file due to simultaneous data writing can be prevented.

## Claims

1. A file control device provided for a use system (1, 2, 11, 71, 72) accessing a file resource (4, 65) in a network, for handling access requests issued by a first access source (21, 81, 83) requesting exclusion of the file resource and a second access source (21, 81 83) requesting no exclusion of the file resource, the file control device comprising:
an interface device (31, 39, 40, 41) for sending out an access request from the first access source and an access request from the second access source to the network;
a registration device (43, 44, 45,46) for registering the sent access requests; and
a control device (32, 33, 34, 35, 36, 37, 38) for performing exclusive control over the file resource between the access request from the first access source and the access request from the second access source in response to the access request from the second access source.

2. The file control device according to claim 1, further comprising
a device (42) for registering an operational environment of exclusive control designated by a user, wherein
said control device performs the exclusive control while referring to the registered operational environment.

3. The file control device according to claim 1 or 2, wherein
when the access request from the second access source corresponds to a process for which exclusion securement of the file resource is required, said control device performs an exclusion wait request process for the file resource.

4. The file control device according to claim 1, 2, or 3, wherein
when the access request from the second access source corresponds to a process for which exclusion release of the file resource is required, said control device performs an exclusion release request process for the file resource.

5. The file control device according to any of the preceding claims, wherein
when there is no access request from the second access source for a specific time period after exclusion of the file resource is secured in response to the access request from the second access source, said control device compulsorily releases the exclusion of the file resource.

6. A file control device (3, 7) connected to a network having a first access source (21, 81, 83) requesting exclusion of a file resource (4, 65) and a second access source (21, 81, 83) requesting no exclusion of the file resource, for handling access requests for the file resource, the file control device comprising:
an interface device (31) for receiving an access request from the first access source and an access request from the second access source through the network;
a registration device (43, 44, 45, 46) for registering the received access requests; and
a control device (32, 33, 34, 35, 36, 37, 38) for performing exclusive control over the file resource between the access request from the first access source and the access request from the second access source in response to the access request from the second access source.

7. The file control device according to claim 6, further comprising
a device (42) for registering an operational environment of exclusive control designated by a user, wherein
said control device performs the exclusive control while referring to the registered operational environment.

8. The file control device according to claim 6 or 7, wherein
when the access request from the second access source corresponds to a process for which exclusion securement of the file resource is required, said control device performs an exclusion wait request process for the file resource.

9. The file control device according to claim 6, 7 or 8, wherein
when the access request from the second access source corresponds to a process for which exclusion release of the file resource is required, said control device performs an exclusion release request process for the file resource.

10. The file control device according to any of tne claims 6 to 9, wherein
when there is no access request from the second access source for a specific time period after exclusion of the file resource is secured in response to the access request from the second access source, said control device compulsorily releases the exclusion of the file resource.

11. A computer-readable storage medium (102, 105, 109, 111) on which is recorded a program enabling a computer provided for a use system (1, 2, 11, 71, 72) accessing a file resource (4, 65) in a network, for handling access requests issued by a first access source (21, 81, 83) requesting exclusion of the file resource and a second access source (21, 81, 83) requesting no exclusion of the file resource, to perform a process, the process comprising:
sending out an access request from the first access source and an access request from the second access source to the network;
registering the sent access requests; and
performing exclusive control over the file resource between the access request from the first access source and the access request from the second access source in response to the access request from the second access source.

12. A computer-readable storage medium (102, 105, 109, 111) on which is recorded a program enabling a computer (3, 7) connected to a network having a first access source (21, 81 , 83) requesting exclusion of a file resource (4, 65) and a second access source (21, 81, 83) requesting no exclusion of the file resource, for handling access requests for the file resource, to perform a process, the process comprising:
receiving an access request from the first access source and an access request from the second access source through the network;
registering the received access requests; and
performing exclusive control over the file resource between the access request from the first access source and the access request from the second access source in response to the access request from the second access source.

13. A propagation signal for propagating a program enabling a computer provided for a use system (1, 2, 11, 71, 72) accessing a file resource (4, 65) in a network, for handling access requests issued by a first access source (21, 81, 83) requesting exclusion of the file resource and a second access source (21, 81, 83) requesting no exclusion of the file resource, to perform a process, the process comprising:
sending out an access request from the first access source and an access request from the second access source to the network;
registering the sent access requests; and
performing exclusive control over the file resource between the access request from the first access source and the access request from the second access source in response to the access request from the second access source.

14. A propagation signal for propagating a program enabling a computer (3, 7) connected to a network having a first access source (21, 81, 83) requesting exclusion of a file resource (4, 65) and a second access source (21, 81, 83) requesting no exclusion of the file resource, for handling access requests for the file resource, to perform a process, the process comprising:
receiving an access request from the first access source and an access request from the second access source through the network;
registering the received access requests; and
performing exclusive control over the file resource between the access request from the first access source and the access request from the second access source in response to the access request from the second access source.

15. A file control method used in a use system (1, 2, 11, 71, 72) accessing a file resource (4, 65) in a network, for handling access requests issued by a first access source (21, 81, 83) requesting exclusion of the file resource and a second access source (21, 81, 83) requesting no exclusion of the file resource, the file control method comprising:
sending out an access request from the first access source and an access request from the second access source to the network;
registering the sent access requests; and
performing exclusive control over the file resource between the access request from the first access source and the access request from the second access source in response to the access request from the second access source.

16. A file control method used in a shared system (12, 73) connected to a network having a first access source (21, 81, 83) requesting exclusion of a file resource (4, 65) and a second access source (21, 81, 83) requesting no exclusion of the file resource, for handling access requests for the file resource, the file control method comprising:
receiving an access request from the first access source and an access request from the second access source through the network;
registering the received access requests; and
performing exclusive control over the file resource between the access request from the first access source and the access request from the second access source in response to the access request from the second access source.

17. A file control device provided for a use system (1, 2, 11, 71, 72) accessing a file resource (4, 65) in a network, for handling access requests issued by a first access source (21, 81, 83) requesting exclusion of the file resource and a second access source (21, 81, 83) requesting no exclusion of the file resource, the file control device comprising:
interface means (31, 39, 40, 41) for sending out an access request from the first access source and an access request from the second access source to the network;
registration means (43, 44, 45, 46) for registering the sent access requests; and
control means (32, 33, 34, 35, 36, 37, 38) for performing exclusive control over the file resource between the access request from the first access source and the access request from the second access source in response to the access request from the second access source.

18. A file control device (3, 7) connected to a network having a first access source (21, 81, 83) requesting exclusion of a file resource (4, 65) and a second access source (21, 81, 83) requesting no exclusion of the file resource, for handling access requests for the file resource, the file control device comprising:
interface means (31) for receiving an access request from the first access source and an access request from the second access source through the network;
registration means (43, 44, 45, 46) for registering the received access requests; and
control means (32, 33, 34, 35, 36, 37, 38) for performing exclusive control over the file resource between the access request from the first access source and the access request from the second access source in response to the access request from the second access source.
